# EUROPÄISCHE PATENTANMELDUNG

(11) **EP 2 689 886 A1**
(43) Veröffentlichungstag der Anmeldung: **29.01.2014**
(21) Anmeldenummer: 12178175.1
(22) Anmeldetag: 27.07.2012
(51) Int. Cl.: B23P 9/00, B24B 39/00, C21D 7/04, B24B 29/00

(54) **Verfahren zum Bearbeiten von Werkstoffen durch Fräsen und nachgelagertes Bürsten**

(71) Anmelder: Siemens Aktiengesellschaft, 80333 München (DE)
(72) Erfinder: David, Walter, 45481 Mülheim an der Ruhr (DE); Knoche, Wolfram, 46487 Wesel (DE)

(57) **Zusammenfassung**

Die Erfindung betrifft ein Verfahren zum Bearbeiten von Werkstoff, insbesondere von Stahl, bei dem mit einer so hohen Schneidgeschwindigkeit gefräst wird, dass oberflächennahe Zugeigenspannungen auftreten können, die einen vorgegebenen Wert überschreiten und durch ein nachfolgendes Bürsten die Zugeigenspannungen unter den vorgegebenen Wert gesenkt werden können. Ferner wird eine Einrichtung zur Durchführung dieses Verfahrens beansprucht.

## Beschreibung

Die Erfindung betrifft ein Verfahren zum Bearbeiten von Werkstoffen durch Fräsen und nachgelagertes Bürsten.

Zum Hintergrund der Erfindung ist auszuführen, dass bei Dampfturbinen die Verbindungen zwischen Turbinenwelle und den Laufschaufeln mit zu den am höchsten beanspruchten Komponenten gehören. Daher ist es auch wichtig den oberflächennahen Eigenspannungszustand nach der Bearbeitung in einem möglichst unkritischen Bereich zu halten. Entstehen bei der Bearbeitung zu hohe Zugeigenspannungen im oberflächennahen Bereich, können diese durch Überlagerung mit den Betriebsspannungen zu Risseinleitung führen. Um durch die Bearbeitung möglichst keine, oder nur niedrige Zugeigenspannungen zu erhalten, werden fest definierte Bearbeitungs- bzw. Fräsparameter, wie z.B. Schnitt- und Vorschubgeschwindigkeit, Spantiefe usw. vorgegeben. Diese Vorgaben führen meist zu reduzierten Schnitt- und Vorschubgeschwindigkeiten und damit zu einer oft deutlichen Erhöhung der Bearbeitungszeit.

Aufgabe der vorliegenden Erfindung ist es, ein Verfahren anzugeben mit dem eine weniger aufwändige Bearbeitung von Werkstoffen möglich ist, ohne die mit Zugeigenspannungen verbundenen Probleme hinnehmen zu müssen. Ferner ist eine Vorrichtung anzugeben, mit denen ein solches Verfahren durchgeführt werden kann.

Die Lösung dieser Aufgabe findet sich insbesondere in den unabhängigen Patentansprüchen. Die abhängigen Patentansprüche lehren vorteilhafte Ausgestaltungen. In der nachfolgenden Beschreibung sind weitere Details angegeben.

Erfindungsgemäß wurde erkannt, dass ein Verfahren zum Bearbeiten von Werkstoffen, insbesondere von Stahl bereitzustellen ist. Dabei wird mit einer so hohen Schneidgeschwindigkeit gefräst, dass Zugeigenspannungen auftreten können, die einen vorgegebenen Wert überschreiten können, und bei dem durch ein nachfolgendes Bürsten die den vorgegebenen Wert überschreitenden Zugeigenspannungen unter den vorgegebenen Wert gesenkt werden. Zunächst ist auszuführen, dass auch bei höheren Schneidgeschwindigkeiten nicht immer Zugeigenspannungen in unerwünschter Weise auftreten müssen. Allerdings treten bei hohen Schneidgeschwindigkeiten unerwünschte Zugeigenspannungen so häufig auf, dass dies nicht hingenommen werden kann. Um diese Zugeigenspannungen unter einen vorgegebenen Wert zu senken ist erfindungsgemäß vorgesehen, nach dem Fräsen den Werkstoff zu bürsten. Hierzu bedarf es der Erkenntnis, dass durch das Fräsen mit höherer Schneidgeschwindigkeit der Aufwand beim Fräsen so stark reduziert werden kann, dass der zusätzliche Aufwand durch das nachfolgende Bürsten mehr als ausgeglichen wird. Dies ist insofern überraschend, da im Allgemeinen bei der Bearbeitung von Werkstoffen möglichst auf Werkzeugwechsel verzichtet wird, um unnötigen Aufwand zu vermeiden.

In einer Ausführungsform des Verfahrens ist vorgesehen, dass Nuten, beispielsweise Tannennuten, in Turbinenwellen oder in Radscheiben gefräst werden. Wie einleitend ausgeführt, handelt es sich bei Turbinenwellen um stark beanspruchte Bauteile, insbesondere an der Verbindung der Turbinenwellen mit den an der Turbinenwelle angebrachten Schaufeln. Hierzu sind Nuten, häufig Tannennuten, vorgesehen. Bei Tannennuten handelt es sich um Ausnehmungen im Werkstoff, deren Breite mit der Tiefe der Ausnehmung sinkt. Dies erfolgt allerdings nicht gleichmäßig. Vielmehr sind die Außenseiten der Tannennuten wellenförmig. Damit ergibt sich ein Profil, das ähnlich einer Tanne ist. An eine Verengung schließt sich eine Verbreiterung an. Danach folgt wieder eine Verengung, die enger ist als die vorhergehende Verengung. Auch die sich nun wieder anschließende Verbreiterung ist weniger breit als die vorhergehende Verbreiterung, aber breiter als die unmittelbar vorhergehende Verengung. Bauteile mit entsprechender Form können in eine solche Tannennut eingesetzt werden und sehr stabil darin befestigt werden. Gerade beim Fräsen von Tannennuten können unerwünschte Zugeigenspannungen auftreten. Für die Stabilität von Tannennuten ist es sehr wichtig, dass in unterschiedlichen Bereichen unterschiedliche Werte von Zugeigenspannungen nicht überschritten werden.

Auch bei Radscheiben handelt es sich um hoch beanspruchte Teile, sodass auch hier das erfindungsgemäße Verfahren von besonderer Bedeutung ist.

In einer Ausführungsform des Verfahrens wird erreicht, dass das Bürsten die Zugeigenspannungen in Druckeigenspannungen umwandelt. Während Zugeigenspannungen die Rissbildung und eine daraus resultierende weitergehende Beschädigung begünstigen, sind Druckeigenspannungen für die Stabilität sogar günstig. Druckeigenspannungen verhindern das Entstehen von Rissen. Bedeutsam ist hierbei, dass es genügt, dass die Zugeigenspannungen vor allem in einem oberflächennahen Bereich, vorgegebene Werte nicht überschreiten.

In einer Ausführungsform des Verfahrens ist vorgesehen, dass das Bürsten durch eine rotatorische und/oder durch eine translatorische Bewegung der Bürsten erfolgt. Die Bürsten auf einem Werkstoff zu drehen, also eine rotatorische Bewegung auszuführen, ist für andere Anwendungen, etwa zur Reinigung von Oberflächen, durchaus verbreitet. Versuche haben aber ergeben, dass die Senkung unerwünschter Zugeigenspannungen auch durch translatorische Bewegungen gut erreicht werden kann. Dies erfolgt vor allem dadurch, dass die Bürsten gleichsam oszillierend bewegt werden. Bei der Auswahl des Verfahrens spielt auch eine Rolle, für welche Bewegung aus anderen Gründen ohnehin Werkzeuge zur Verfügung stehen. Ist etwa ein Bearbeitungsroboter vorhanden, der für zügige Translationsbewegung mit laufendem Richtungswechsel geeignet ist, so können daran Bürsten befestigt werden, sodass mit einer translatorischen Bewegung gebürstet werden kann.

In einer Ausführungsform des Verfahrens wird eine Bürstvorrichtung eingesetzt, bei der mehrere Bürsten vorhanden sind, sodass mit der Bürstvorrichtung gleichzeitig an mehreren Stellen gebürstet werden kann. Damit kann eine deutliche Reduktion der Bearbeitungsdauer für das Bürsten erzielt werden.

In einer Ausgestaltung der genannten Ausführungsform sind die Bürsten an der Bürstvorrichtung so angeordnet, dass gleichzeitig mehrere Bereiche in einer Tannennut gebürstet werden können. Wie oben ausgeführt, haben Tannennuten verschiedene Bereiche mit verschiedenen Breiten. Verwendet man nun eine Bürstvorrichtung mit verschiedenen Bürsten, können in einem Arbeitsgang mehrere Bereiche der Tannennut bearbeitet werden. So kann etwa eine Spindel vorgesehen sein, an der mehrere Bürsten montiert sind. Durch eine Drehung der Spindel werden alle daran montierten Bürsten gedreht. Sind nun an einer Spindel mehrere Bürsten montiert, die auf eine Tannennut abgestimmt sind, genügt es zum Bürsten der Tannennut die Spindel in die Tannennut hineinzuführen. Durch Drehung der Spindel werden alle zu bürstenden Bereiche gebürstet. Hierbei ist auszuführen, dass nicht alle Bereiche der Tannennut gebürstet werden müssen. Freilich ist auch eine Kombination von rotatorischen und translatorischen Bewegungen denkbar. So könnte eine Spindel gleichzeitig gedreht und hin und her bewegt werden. Auch eine Bearbeitung einer Tannennut durch Bürsten mit einer translatorischen Bewegung ist gleichzeitig mit mehreren Bürsten möglich. So können an einem Halter mehrere Bürsten befestigt sein. Der Halter wird in die Tannennut eingeführt. In dieser wird er dann von der einen zur anderen Seite zügig hin und her bewegt.

In einer weiteren Ausführungsform des Verfahrens sind die Bürsten und daran befestigte Borsten hinsichtlich der gewünschten Senkung der Zugeigenspannungen und einer gewünschten Standzeit der Bürstvorrichtung optimiert, wobei bei der Optimierung berücksichtigt ist, dass die Senkung der Zugeigenspannungen vom Material der Borsten, der Zustellung der Borsten, der Borstensteifigkeit und den bei Beginn des Bürstens vorhandenen Zugeigenspannungen abhängt. Zunächst ist darzustellen, dass die jeweiligen Bürsten so aufgebaut sind, dass eine Vielzahl von Borsten an den Bürsten befestigt ist. Bei der Auslegung und Auswahl der Bürsten und Borsten sind zwei Dinge zu berücksichtigen. Zunächst ist natürlich sicherzustellen, dass die gewünschte Senkung der Zugeigenspannungen erreicht wird. An dieser Stelle soll erwähnt werden, dass es tatsächlich wichtig ist, dass dies auch sicher erfolgt. Sollte dies nämlich trotz des Bürstens nicht erfolgen, so besteht eine erhebliche Gefahr, dass Schäden auftreten. Dies kann zu hohen Sachschäden oder sogar zu Personenschäden führen, sodass hier oft große Sicherheit verlangt wird. Ein weiterer Gesichtspunkt bei der Auswahl und Optimierung der Bürsten und Borsten ist die Standzeit der Bürstvorrichtung. Es geht also um die Frage, wie lange die Vorrichtung betrieben werden kann, bevor ein Wechseln der Bürsten erforderlich wird. Dies kann zu Zielkonflikten mit der vorher genannten Anforderung nach sicherer Senkung der Zugeigenspannungen führen. In vielen Fällen führt eine sichere Senkung der Zugeigenspannungen zu einer schnellen Beschädigung der Borsten, sodass die Standzeit reduziert wird. Im Einzelfall ist eine gewisse Menge an Versuchen erforderlich. Wichtig ist die Erkenntnis, dass die Senkung der Zugeigenspannungen vor allem vom Material der Borsten, der Zustellung der Borsten, der Borstensteifigkeit und den bei Beginn des Bürstens vorhandenen Zugeigenspannungen abhängt. Eine einfache Proportionalität oder ein sonstiger fassbarer mathematischer Zusammenhang konnte jedoch trotz umfangreicher Versuche nicht festgestellt werden. Zur Vermeidung von Missverständnissen wird dargelegt, dass unter der Zustellung der Borsten verstanden wird, um wie viel sich die Borsten beim Andrücken der Bürsten an den zu bearbeitenden Werkstoff verbiegen. Dies ist am besten anhand eines Beispiels verständlich. Beträgt die Zustellung etwa 2 mm, so heißt dies, dass die Bürsten, ausgehend von dem Zustand, in dem die Borsten gleichsam kraftlos am zu bürstenden Werkstoff anliegen, noch einmal 2 mm näher an den Werkstoff heran gedrückt werden. Damit werden die Borsten freilich nicht verkürzt. Es erfolgt aber eine gewisse Verbiegung. Dies führt, auch abhängig von der Borstensteifigkeit, zu einem gewissen Anpressdruck der Borsten auf dem zu bearbeitenden Werkstoff. Insofern ist verständlich, dass die Zustellung zusammen mit der Borstensteifigkeit die Senkung der Zugeigenspannungen beeinflusst.

In einer weiteren Ausführungsform des Verfahrens ist vorgesehen, dass Bürsten eingesetzt werden mit Borsten, die aus einem der nachfolgenden Materialien bestehen oder dieses enthalten: Edelstahl, Stahl, Nichteisenmetalle, darunter beispielsweise Messing oder Kupfer, Kunststoff, Kunststoff mit eingelagertem Schleifmittel, Naturborsten. Beim Edelstahl kann es sich beispielsweise um einen Edelstahl mit der Bezeichnung WNr. 1.4301 (X5CrNi18-10) handeln. Beim Kunststoff kann es sich um Polyester, Polyamid, Polyethylen oder dergleichen handeln. Freilich ist auch eine Vielzahl anderer Kunststoffe denkbar. Wie oben dargelegt bedarf es im Einzelfall gewisser Versuche, um das optimale Material zu ermitteln. An dieser Stelle soll auch erwähnt werden, dass etwa die Borstenausführung, diese kann gewellt, gerade oder gezopft sein, das Ergebnis des Bürstens beeinflusst.

Als günstig hat sich herausgestellt, Bürsten einzusetzen mit Borsten aus Edelstahldraht, die einen Borstendurchmesser von etwa 0,15 mm bis etwa 0,35 mm haben und eine Zugfestigkeit von etwa 1500 N/mm² bis etwa 2400 N/mm². Beispielsweise kommt eine Zugfestigkeit von etwa 1800 N/mm² bis etwa 2100 N/mm² in Betracht. Die vorgenannten Werte haben sich als sinnvoll erwiesen, um in niedriglegiertem Vergütungsstahl Zugeigenspannungen in gewünschter Weise zu senken. Es gibt einen weiten Bereich sinnvoller Verhältnisse von Borstenlänge zu Borstendurchmesser. So haben sich Werte von etwa 30 bis etwa 500 bewährt.

Generell ist noch auszuführen, dass neben den bereits erwähnten Einflussgrößen für das Ergebnis des Bürstens auch die Art der Borstenbindung eine Rolle spielt. Hierbei ist zu beachten, dass die Borsten von einem sogenannten Seelendraht ausgehen. Hierbei kann der Seelendrahtquerschnitt, etwa ein runder oder ein quadratischer Seelendrahtquerschnitt, Einfluss haben. Generell ist weiterhin auszuführen, dass im Allgemeinen die Wirkung des Bürstens, also die Senkung der Zugeigenspannungen pro Zeitintervall durch eine Erhöhung der Borstensteifigkeit, eine Erhöhung der Zustellung, eine Erhöhung der Besatzdichte, also der Zahl der Borsten pro Fläche, und eine Erhöhung der Bürstgeschwindigkeit gesteigert werden kann. Allerdings ist darauf hinzuweisen, dass ungeeignete Bürstparameter auch wieder zu Zugeigenspannungen in gewissen Bereichen oder einer Schädigung der Oberfläche führen können. Zur Erhöhung der Borstensteifigkeit ist ein großer Borstendurchmesser bei geringer Borstenlänge sinnvoll. Unterstützt wird die Borstensteifigkeit auch durch eine gezopfte Ausführung der Borsten. Zu beachten ist dabei aber, dass eine hohe Borstensteifigkeit die Borstenbindung an den Seelendrähten belastet, wodurch die Standzeit der Bürste reduziert wird. Ferner führt eine hohe Zustellung und eine einhergehende starke Belastung der Borsten auf Biegung zu einer Reduktion der Standzeit. Die Standzeit wird auch durch eine geringe Besatzdichte reduziert. Auch Borstenbruch, der durch geringe Biegefestigkeit des Borstenmaterials hervorgerufen werden kann, führt zu einer Reduktion der Standzeit der Bürste. Eine plastische Verformung der Borsten, etwa durch geringe Elastizität der Borsten führt ebenso wie eine schlechte Bindung der Borsten zu einer Reduktion der Standzeit der Bürste. Wie bereits erwähnt, ist eine Optimierung durch Versuche zu unterstützen.

In einer Ausführungsform des Verfahrens ist vorgesehen, dass das Fräsen mit HSS-Schneidstoffen oder mit Hartmetallschneidstoffen erfolgt. Mit solchen Schneidstoffen können hohe Schneidgeschwindigkeiten erreicht werden. Die dabei hervorgerufenen Zugeigenspannungen können wie oben geschildert durch Bürsten wieder eliminiert werden.

In einer Ausführungsform des Verfahrens ist es möglich mit einem Fräsvorschub von bis zu 38 mm/min, beispielsweise bis zu etwa 13 mm/min zu arbeiten. Dieser hohe Fräsvorschub kann mit den oben geschilderten HSS-Schneidstoffen oder Hartmetallschneidstoffen erfolgen. Für einen Fräsvorschub von bis zu 38 mm/min eignen sich vor allem Hartmetallschneidstoffe. Genügen etwa 13 mm/min so sind HSS-Schneidstoffe eine gute Wahl.

Beansprucht wird auch eine Bürstvorrichtung, die zur Durchführung des oben geschilderten Verfahrens ausgebildet ist.

In einer Ausgestaltungsform weist diese Bürstvorrichtung Bürsten auf, deren Kontur auf zu fräsende Nuten abgestimmt ist. So sind beispielsweise die Bürsten auf die zu bürstenden Tannennuten, wie oben dargestellt, abgestimmt.

Weitere Einzelheiten der Erfindung werden nun anhand der schematischen Zeichnungen näher beschrieben. Dabei zeigt:
- Figur 1: Bereiche des Eigenspannungsverlaufs vor und nach dem Bürsten,
- Figur 2: Nutprofil einer Tannennut und zugehörige Zugeigenspannungsanforderungen,
- Figur 3: eine einzelne Bürste im Querschnitt,
- Figur 4: mehrere unterschiedlich große Bürsten zum Bürsten einer Tannennut und
- Figur 5: drei verschieden große Bürsten an einer gemeinsamen Spindel.

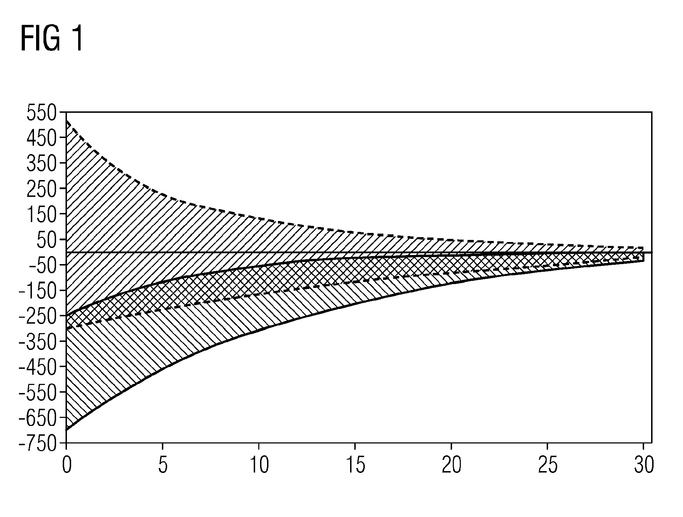

In Figur 1 sind die Bereiche des Eigenspannungsverlaufs vor und nach dem Bürsten gezeigt. Nach rechts ist die Tiefe in Mikrometer aufgetragen. Nach oben die Eigenspannung in MPa. Die waagerechte Linie in der Mitte gibt die Eigenspannung von Null an. Dort liegen also weder Zugeigenspannungen noch Druckeigenspannungen vor. Im Bereich oberhalb dieser Linie liegen Zugeigenspannungen vor. Im Bereich unterhalb dieser Linie liegen Druckeigenspannungen vor.

Der rechts schraffierte Bereich, also der Bereich zwischen den beiden gestrichelten Linien, gibt an, in welchen Bereichen sich die Eigenspannung eines mit hoher Schneidgeschwindigkeit gefrästen Werkstoffs vor dem Bürsten befindet. Dabei ist zu erkennen, dass in vielen Fällen unerwünschte Zugeigenspannungen vorliegen. Freilich gibt es auch Fälle, in denen Druckeigenspannungen bestehen. Der links schraffierte Bereich, also der Bereich zwischen den beiden durchgezogenen Linien, gibt die Eigenspannungswerte nach dem Bürsten an. Es ist zu erkennen, dass stets Druckeigenspannungen vorliegen. Derartige Druckeigenspannungen sind erwünscht, da dadurch das Auftreten von Rissen besonders gut verhindert wird.

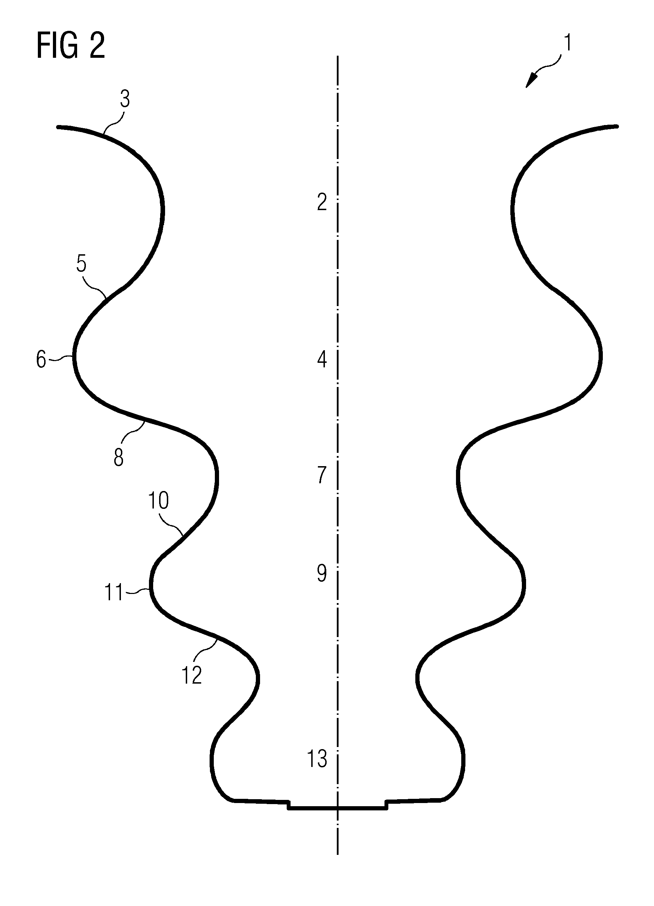

Figur 2 zeigt eine Tannennut 1. Zu erkennen ist ein erster verengter Bereich 2. Dieser ist eingefasst von einer Nutkontur 3, die rund in den verengten Bereich 2 hineinragt. Die Nutkontur 3 ergibt sich durch entsprechendes Fräsen. Betrachtet man nun die Nutkontur 3 beim Übergang vom verengten Bereich 2 in einen oberen aufgeweiteten Bereich 4, so ist ein als Tragflanke ausgebildeter erster aufweitender Bereich 5 im Werkstoff zu erkennen. An den ersten aufweitenden Bereich 5 schließt sich ein erster Außenradienbereich 6 an. Beim Übergang zum zweiten verengten Bereich 7, der enger ist als der erste verengte Bereich 2 schließt sich an den Außenradienbereich 6 ein erster verengender Bereich 8 an. Folgt man nun der Nutkontur 3 weiter, ergibt sich bei der Tannennut 1 wieder eine Verbreiterung in einen zweiten aufgeweiteten Bereich 9. Im Werkstoff ist der zweite aufweitende Bereich 10, bei dem es sich um eine weitere Tragflanke handelt, zu erkennen.

Dem zweiten aufweitenden Bereich 10 folgt ein Außenradienbereich 11 und diesem ein zweiter verengender Bereich 12. Es ist also ersichtlich, wie eine Tannennut genauer aussieht. In den Außenradienbereichen sollten nach der Fräsbearbeitung möglichst niedrige Zugeigenspannungen vorliegen. In den niedriger belasteten Innenrandbereichen bestehen diese Anforderungen nicht.

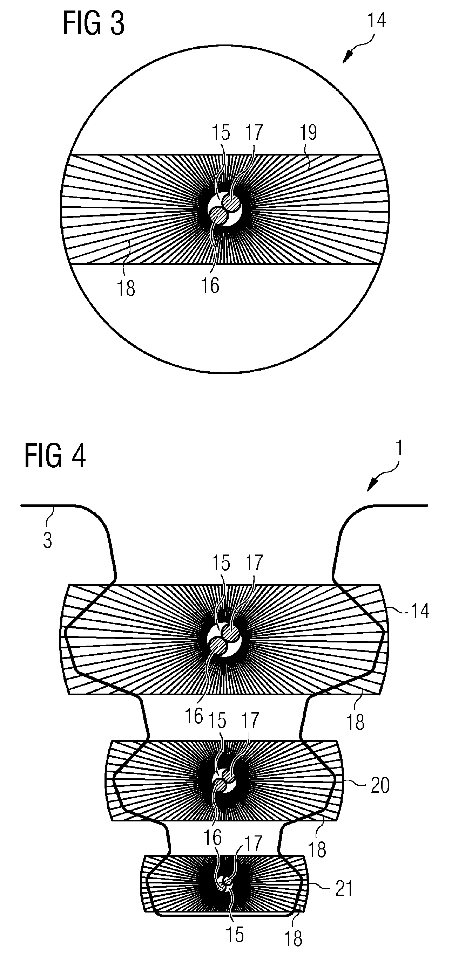

Figur 3 zeigt eine einzelne Bürste 14 im Querschnitt. Zu erkennen ist eine Seele 15 mit zwei Seelendrähten 16 und 17. Davon gehen Borsten 18 weg. In Segmenten 19 sind die Borsten 18 abgeschnitten.

Figur 4 zeigt die Anordnung der Bürsten in der Tannennut 1. Dabei ist die Bürste 14 im ersten aufgeweiteten Bereich 4, eine kleinere Bürste 20 für den zweiten aufgeweiteten Bereich 9 und eine nochmals kleinere Bürste 21 für den unteren aufgeweiteten Bereich 13 dargestellt. Im Interesse der Übersichtlichkeit sind manche Bezugsziffern der Tannennut 1 hier weggelassen, insofern wird auf Figur 1 verwiesen. Dargestellt sind Borsten 18, welche über die Nutkontur 3 hinausragen. Dies kann freilich nicht dahingehend verstanden werden, dass die Borsten 18 tatsächlich in den Werkstoff hineinragen würden. Dies soll vielmehr anschaulich machen, dass die Borsten 18 von ihrer Länge her eigentlich über die Nutkontur 3 hinausragen würden. Da die Borsten 18 daran vom Werkstoff, welcher zu bürsten ist, gehindert werden, erfolgt die weiter oben geschilderte Zustellung der Borsten 18.

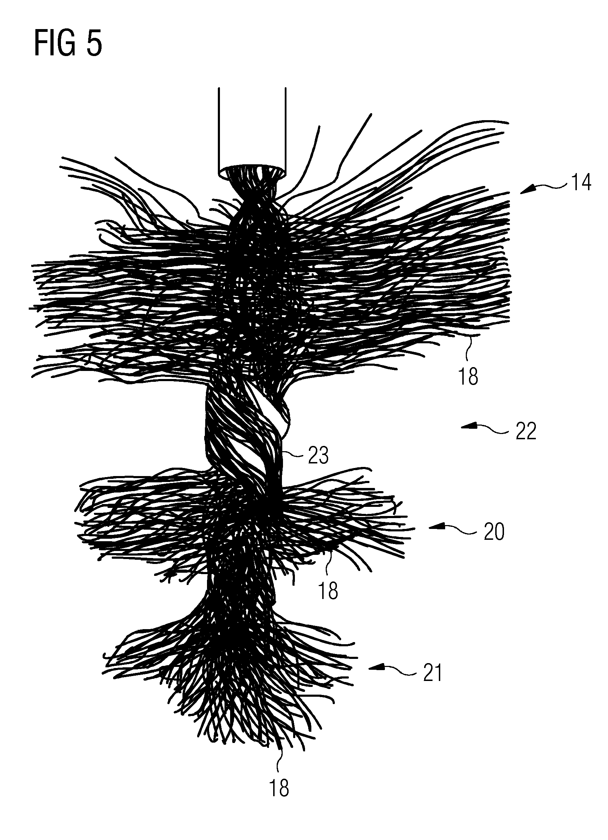

Figur 5 zeigt eine Abbildung einer Bürsteinrichtung 22. Zu er kennen ist eine Spindel 23. An dieser sind drei Bürsten, nämlich die größere Bürste 14, die mittlere Bürste 20 und die kleinere Bürste 21 angebracht. Durch Drehung der Spindel 23 erfolgt eine Drehung der Bürsten 14, 20 und 21. Damit kann ein rotatorisches Bürsten erfolgen.

Beispielhaft ist die Tannennut 1 in einem plangedrehten Rundmaterial aus 26NiCrMoV145 ausgebildet. Die Bürste ist aus den Borsten 18 beispielhaft aus einem Edelstahldraht mit einem Durchmesser von 0,35 mm und einer Zugfestigkeit 1,8 bis 2,1 kN/mm aufgebaut. Die Bürste ist gezopft, wobei die Borstenlänge 30 mm beträgt. Beim Bürsten wird beispielhaft eine Zustellung von 2mm bis 3,5 mm bei 150 Doppelhüben und einer mittleren Bürstgeschwindigkeit von 1 m/s gewählt.

Zur Prozessüberwachung ist für das rotatorische Bürsten ein Drehmomentsensor und für das translatorische Bürsten ein Kraftsensor vorgesehen. Mit zunehmendem Verschleiß der Bürste nimmt das übertragene Drehmoment, bzw. die Kraft ab. Bei vorzeitigem Bürstenverschleiß kann so ein Bürstenwechsel initiiert werden. Falls die falsche oder keine Bürste eingesetzt wurde, spricht diese Art der Überwachung ebenfalls an.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Bearbeiten von Werkstoff, insbesondere von Stahl, bei dem mit einer so hohen Schneidgeschwindigkeit gefräst wird, dass oberflächennahe Zugeigenspannungen auftreten können, die einen vorgegebenen Wert überschreiten, und bei dem durch ein nachfolgendes Bürsten die den vorgegebenen Wert überschreitenden Zugeigenspannungen unter den vorgegebenen Wert gesenkt werden.

2. Verfahren nach Anspruch 1,
**dadurch gekennzeichnet, dass**
Nuten, beispielsweise Tannennuten (1), in Turbinenwellen oder in Radscheiben gefräst werden.

3. Verfahren nach einem der Ansprüche 1 oder 2,
**dadurch gekennzeichnet, dass**
das Bürsten die Zugeigenspannungen in Druckeigenspannungen umwandelt.

4. Verfahren nach einem der vorhergehenden Ansprüche,
**dadurch gekennzeichnet, dass**
das Bürsten durch eine translatorische und/oder eine rotatorische Bewegung erreicht wird.

5. Verfahren nach einem der vorhergehenden Ansprüche,
**dadurch gekennzeichnet, dass**
eine Bürstvorrichtung (22) eingesetzt wird, bei der mehrere Bürsten (14, 20,21)vorhanden sind, so dass mit der Bürstvorrichtung (22) gleichzeitig an mehreren Stellen (5, 6, 8, 10, 11, 12) gebürstet werden kann.

6. Verfahren nach Anspruch 5,
**dadurch gekennzeichnet, dass**
die Bürsten (14, 20,21) an der Bürstvorrichtung (22) so angeordnet sind, dass gleichzeitig mehrere Bereiche der Tannennut (5, 6, 8, 10, 11, 12) gebürstet werden können.

7. Verfahren nach einem der vorhergehenden Ansprüche,
**dadurch gekennzeichnet, dass**
die Bürsten (14, 20,21) und daran befestigte Borsten (18) hinsichtlich der gewünschten Senkung der Zugeigenspannungen und einer gewünschten Standzeit der Bürstvorrichtung (22) optimiert sind, wobei bei der Optimierung berücksichtigt ist, dass die Senkung der Zugeigenspannungen vom Material der Borsten (18), der Zustellung der Borsten (18), der Borstensteifigkeit, der Borstengeschwindigkeit, der Besatzdichte und von bei Beginn des Bürstens vorhandenen Zugeigenspannungen abhängt.

8. Verfahren nach einem der vorhergehenden Ansprüche,
**dadurch gekennzeichnet, dass**
Bürsten (14, 20, 21) eingesetzt werden mit Borsten (18), die aus einem der nachfolgenden Materialien bestehen oder dieses enthalten: Edelstahl, Stahl, Nichteisen-Metalle, darunter beispielsweise Messing oder Kupfer, Kunststoff, Kunststoff mit eingelagertem Schleifmittel, Naturborsten.

9. Verfahren nach einem der vorhergehenden Ansprüche,
**dadurch gekennzeichnet, dass**
Bürsten (14, 20, 21) eingesetzt werden mit Borsten (18) aus Edelstahldraht, die einen Borstendurchmesser von etwa 0,15 mm bis etwa 0,35 mm haben und eine Zugfestigkeit von etwa 1500 N/mm² bis etwa 2400 N/mm², beispielsweise eine Zugfestigkeit von etwa 1800 N/mm² bis etwa 2100 N/mm².

10. Verfahren nach einem der vorhergehenden Ansprüche,
**dadurch gekennzeichnet, dass**
die Borsten (18) ein Verhältnis von Borstenlänge zu Borstendurchmesser von etwa 30 bis etwa 500 haben.

11. Verfahren nach einem der vorhergehenden Ansprüche,
**dadurch gekennzeichnet, dass**
das Fräsen mit HSS-Schneidstoffen oder mit Hartmetallschneidstoffen erfolgt.

12. Verfahren nach einem der vorhergehenden Ansprüche,
**dadurch gekennzeichnet, dass**
das Fräsen mit einem Fräsvorschub von bis zu etwa 38 mm/min, beispielsweise bis zu etwa 13 mm/min erfolgt.

13. Bürstvorrichtung (22) ausgebildet zur Durchführung eines Verfahrens nach einem der vorhergehenden Ansprüche.

14. Bürstvorrichtung nach Anspruch 13,
**dadurch gekennzeichnet, dass**
die Bürstvorrichtung (22) Bürsten (14, 20,21) aufweist, deren Kontur auf zu fräsende Nuten (1) abgestimmt ist.
